(19) Europäisches Patentamt
European Patent Office
Office européen des brevets

(11) Publication number: **0 080 837**
**B1**

(12) **EUROPEAN PATENT SPECIFICATION**

(45) Date of publication of patent specification: **11.03.87**

(51) Int. Cl.$^4$: **C 08 K 3/22,** C 08 L 27/06

(21) Application number: **82306148.6**

(22) Date of filing: **18.11.82**

(54) **Small particle size hydrated alumina as an impact synergist for impact modified vinyl halide polymers.**

(30) Priority: **19.11.81 US 323141**
**03.11.82 US 438820**

(43) Date of publication of application:
**08.06.83 Bulletin 83/23**

(45) Publication of the grant of the patent:
**11.03.87 Bulletin 87/11**

(84) Designated Contracting States:
**AT BE CH DE FR GB IT LI NL SE**

(56) References cited:
**EP-A-0 052 331**
**US-A-3 936 403**
**US-A-3 957 723**
**US-A-4 000 100**
**US-A-4 143 030**
**US-A-4 147 690**

(73) Proprietor: **M & T CHEMICALS, INC.**
**One Woodbridge Center**
**Woodbridge, New Jersey 07095 (US)**

(72) Inventor: **Stoloff, Alfred**
**18 North Drive**
**Livingston New Jersey 07039 (US)**

(74) Representative: **Ellis, John Clifford Holgate et al**
**MEWBURN ELLIS & CO. 2/3 Cursitor Street**
**London EC4A 1BQ (GB)**

**EP 0 080 837 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

This invention is directed to polymeric vinyl halide formulations and more particularly to the use of very fine particle size (less than about 1 μ avg.) hydrated alumina to form a synergistic combination with impact modifiers in polymeric vinyl halide formulations, preferably rigid formulations.

Generally, the most commercially important polymeric vinyl halide material is polyvinyl chloride (PVC) and this invention will be described herein in terms of PVC. However, it is to be understood that it is applicable to other polymeric vinyl halide materials, as hereinafter defined.

Fillers are added to polymeric vinyl halide materials primarily to reduce cost and, when used in low concentrations, to provide a scrubbing action and reduce plateout. Generally, when their concentration is high enough to affect physical properties, they increase modulus, decrease tensile strength and elongation, and usually decrease impact strength. There are a few fillers, such as fine particle size precipitated, hydrated silicas and ultra-fine, precipitated, coated calcium carbonates that maintain, and even enhance, impact strength in rigid PVC formulations [J. Radosta, 37th SPE Annual Technical Conference Preprints, pg. 593 (1979)]. These fillers have not gained wide use in exterior rigid PVC applications because of their adverse effect on weatherability.

Hydrated alumina has been gaining acceptance as an additive for use in plastic parts, its low cost along with its flame-retardant and smoke-suppressing characteristics being most widely referred to in the literature (J. Z. Keating, Plastics Compounding, pg. 23, July/August, 1980). Most reported uses of hydrated alumina in PVC compounds have been generally limited to plasticized compositions where improved flame retardancy is obtained when used in concentrations greater than about 10 parts per hundred of polymer [A. W. Morgan, T. C. Mathis and J. D. Hirchen, 30th SPE Annual Technical Concerence Preprints, Chicago, pg. 475 (1972); R. W. Sprague, "Systematic Study of Firebrake ZB as a Fire Retardant in PVC — Part IV Alumina Trihydrate as a Synergist", April, 1973, January, 1975, U.S. Borax Research Corporation, Anaheim, California; C. E. Hoke, SPE Journal, 29 pg. 36 (May, 1973)], but I. Sobolev and E. A. Woychesin, SPE Annual Technical Conference Preprints, pg. 709 (1973) report the use of a 40% loading of hydrated alumina in a rigid PVC formula as a smoke suppressant and show that the filler did not reduce the impact strength. Further, it has recently been suggested, for example, in U.S. Patent 3,957,723 to Lawson et al U.S. Patent 3,985,706 to Kay, U.S. Patent 4,143,030 to Hartitz, and U.S. Patent 4,147,690 to Rich, that improved flame retardancy and smoke suppression can be achieved by a synergistic combination of alumina trihydrate with zinc oxide, zinc borate or bismuth subcarbonate.

It has now been found that extremely fine particle size (less than 1 μ) hydrated alumina can not only be used as an additive for PVC which does not reduce the impact strength of the material, but unexpectedly shows a high degree of synergism with conventional impact modifiers to give significant increases in impact strength accompanied by improved processibility and weathering.

Hydrated alumina has often been called alumina hydrate or alumina trihydrate. The empirical formula is sometime written $Al_2O_33H_2O$ because at elevated temperature, it functions as a flame retardant by decomposing to aluminum oxide and water. But this formula is technically incorrect. The product is actually finely divided crystalline aluminum hydroxide with the composition $Al(OH)_3$.

It may be added at this point that US—A—4143030 (Hartitz) already mentioned above, suggests the use of various sizes of hydrated alumina (about 0.1 to about 200 micrometers), the examples employing hydrated alumina having an average particle size of 1 micrometer. Although there is a reference in this patent to the possible addition to the composition of impact modifying resin, there is no example of this, nor any suggestion of synergism between impact modifying resins and hydrated alumina with an average particle size of less than 1 micrometer for the purpose of increasing the impact strength of the material.

US—A—3936403 (Sakaguchi et al) discloses a synthetic resin composition comprising an olefinic resin, a vinyl chloride resin and a form of hydrated alumina having a particle size of 30 micrometers or less. Again there is no suggestion of combining in a polymeric vinyl halide composition an impact modifier with hydrated alumina, having an average particle size of less than one 1 micrometer.

In accordance with the present invention there is provided a polymeric vinyl halide composition which comprises a polymeric vinyl halide material and an impact modifier characterised in that it also contains hydrated alumina having an average particle size of less than one micrometer in sufficient quantity to form with the said impact modifier a synergistic combination which substantially enhances the impact strength of said composition.

We also provide a method for increasing the impact resistance of a polymeric vinyl halide material which comprises incorporating into a polymeric vinyl halide material

a) an impact modifier; and

b) hydrated alumina having an average particle size of less than one micrometer in an amount which forms a synergistic combination for increasing the impact resistance of said polyvinyl halide material.

The polymeric vinyl halide composition of the invention may also suitably contain a filler material, titanium dioxide being a suitable filler for the purpose. In this description a micrometer is designated by the symbol μ.

Very fine particle size (less than 1 μ avg) hydrated alumina compounded into impact modified rigid PVC formulations gives compositions that surprisingly and unexpectedly exhibit a significant synergistic increase in impact strength. The effect has been demonstrated with a wide variety of impact modifiers generally used in rigid PVC applications.

Torque rheometer and extrusion tests on rigid PVC formulations containing such very fine particle size hydrated alumina show that motor amperage and torques decrease as hydrated alumina concentration increases. Concurrently, an increase in dynamic heat stability was observed.

Another benefit derived from the use of the very fine particle size hydrated alumina in exterior PVC formulations is improved weatherability with the potential for reducing the amount of titanium dioxide or other fillers that are conventionally used for particular applications. Formulations compounded with various levels of the very fine particle size hydrated alumina in accordance with the invention outperformed those with titanium dioxide alone when exposed to both outdoor and accelerated weathering environments. In addition, formulations using reduced levels of titanium dioxide in conjunction with said hydrated alumina weathered as well as compounds using higher levels of titanium dioxide alone.

As used herein, very fine particle size hydrated alumina means hydrated alumina having an average particle size of less than about 1 μ and preferably about 0.5 μ (0.4 to 0.6 μ) or less. Generally, if the average particle size of the hydrated alumina is greater than the above limit there will be a deleterious effect on the Izod impact strength of the material.

It is preferred that the particle size distribution of the hydrated alumina be such that there is no substantial percentage of particles which have a particle size greater than about 1 μ.

The term "Impact Strength" means the Izod Impact Strength as determined in accordance with the procedures of ASTM D—256. Generally, this test is conducted by preparing samples measuring $2\frac{1}{2} \times \frac{1}{2} \times \frac{1}{8}$ or $\frac{1}{4}$ inch (63.5 × 12.5 × 3.2 or 6.4 mm) in dimension, notching the specimens as specified, and impacting the specimens vertically supported in the cantilever beam impact test with a pendulum hammer. The energy absorbed in the width of the sample is transmitted to a range scale which registers the force in pounds from which is calculated the impact strength in foot pounds/inch of notch.

The term "polymeric vinyl halide" means homopolymers and copolymers derived from a vinyl halide as well as polymer blends containing said homopolymer or copolymer as a component. The homopolymers, copolymers and polymer blends containing a vinyl halide useful in the practice of this invention include for example, (1) polyvinyl chloride, polyvinylidene chloride, polyvinyl bromide, polyvinyl fluoride and polyvinylidene fluoride, (2) copolymers of vinyl chloride with one or more copolymerizable ethylenically unsaturated monomers such as vinylidene chloride, vinyl acetate, vinyl butyrate, vinyl benzoate, diethyl fumarate, diethyl maleate, other alkyl fumarates and maleates, vinyl propionate, acrylic acid, methyl acrylate, 2-ethylhexyl acrylate, butyl acrylate, ethyl acrylate and other alkyl acrylates, methacrylic acid, methyl methacrylate, ethyl methacrylate, butyl methacrylate, hydroxyethyl methacrylate and other alkyl methacrylates, methyl alpha chloroacrylate, styrene, vinyl ethers such as vinyl ethyl ether, vinyl chloroethyl ether and vinyl phenyl ether, vinyl ketones such as vinyl methyl ketone and vinyl phenyl ketone, 1-fluoro, -1-chloroethylene, acrylonitrile, chloroacrylonitrile, allylidene diacetate, chloroallylidene diacetate, olefins such as ethylene and propylene, and (3) polymer blends such as blends of polyvinyl chloride and polyethylene, polyvinyl chloride and polymethyl methacrylate, polyvinyl chloride and polybutyl chloride and acrylonitrile-butadiene-styrene terpolymers and ternary mixtures such as those containing polyvinyl chloride, polyethylene methacrylate.

Typical vinyl halide copolymers useable in this invention include vinyl chloride-vinyl acetate, vinyl chloride-vinylidene chloride, vinyl chloride-diethylfumarate, vinyl chloride-trichloroethylene and vinyl chloride-2-ethylhexyl acrylate. The polymer blends useable in the practice of this invention comprise physical blends of at least two or more distinct polymeric species and typically contain from 25 to 95 weight percent of vinyl halide homopolymer or vinyl halide copolymer. The vinyl halide copolymers useable in the practice of this invention typically contain from about 25 to about 95 mole percent vinyl halide units.

In preferred embodiments of the present composition, the polymer is a homopolymer or copolymer of vinyl chloride. This preference is based on the lower cost and commercial availability of vinyl chloride relative to other vinyl halides.

While the very fine particle size hydrated alumina herein described may be used as a filler material in both rigid and flexible polymeric vinyl halide formulations, the surprisingly superior impact strength that can be achieved is of particular commercial significance in rigid formulations (those having less than 10% plasticizer).

The parameters surrounding and the effect of the use of a very fine particle size hydrated alumina in accordance with the practice of the invnetion will now be discussed seratium.

A. Impact Synergism

When calcium carbonate fillers with an average particle size over 1.0 μ are used in rigid PVC formulations, they generally have an adverse effect on impact strength. When the average particle size is less than 1.0 μ, there is no loss in impact strength and, occasionally a slight improvement in impact strength will occur. In formulations containing both impact modifiers and calcium carbonate fillers, there are only slight improvements in impact strength over that obtained with the impact modifier itself.

In non-impact modifier containing PVC formulations the very fine-particle size hydrated alumina used in accordance with this invention also gives small increases in impact strength. However, in PVC formulations containing impact modifiers, hydrated alumina having a very fine particle size (less than

about 1 μ) as herein described behaves dramatically differently than calcium carbonate and acts synergistically with the impact modifier to give a significant and unexpected increase in impact strength. These results are shown in Table 1.

The surprising and unexpected increase in impact strength that is achieved is independent of the type of impact modifier used in the formulation. Impact modifiers generally are rubbery materials which are either partially or completely incompatible with the polymeric vinyl halide and are present as a separate discrete phase. This is in contrast to plasticizers which are completely compatible with the polymeric vinyl halide. Further, impact modifiers improve impact strength without significantly reducing the heat distortion temperature or impairing other desirable mechanical and physical properties. Representative impact modifiers that are suitable for use in accordance with the invention include but are not limited to chlorinated polyethylene, modified acrylic, all-acrylic, ABS and MBS modifiers. It is believed that any conventional impact modifier can be used in the formulations and that the very fine particle size hydrated alumina will continue to show these synergistic effects. For example, the addition of 6 parts per hundred parts resin of very fine particle size hydrated alumina to rigid PVC formulations containing 5 phr of a conventional impact modifier gave increases in Izod impact strength from almost twice to over ten times the impact strength obtained without the addition of hydrated alumina. The data in Table 2 demonstrated that increases in Izod impact from 5—20 ft.-lbs./in. (2.5 to 10.5 mN (cm notch) notch can be obtained.

Hydrated Alumina Particle Size

While the use of small particle size hydrated alumina (average size of 1 μ) is not detrimental to the impact strength of PVC formulations and the use of larger particle size hydrated alumina will reduce the impact strength of the PVC composition, the very substantial increase in impact strength that is achieved with a synergistic combination of a conventional impact modifier and the very fine particle size (less than 1 μ) hydrated alumina as herein described is totally unexpected and surprising.

Table 3 shows that impact synergism is specific to hydrated alumina with an average particle size below about 1 μ. Tests with an average particle size of 1 μ show no effect on impact while larger particle size materials are detrimental to impact strength.

C. Hydrated Alumina Concentration

We have determined that maximum increase in impact strength appears to occur at a ratio of very fine particle size hydrated alumina to impact modifier of about 2—4:1, but significant increases in impact strength are obtained even at 1:1 ratio and some useful effect is noticed as low as a 1:2 ratio. Even lower ratios may be used with some effect but generally commercially significant results necessitate at least the 1:2 ratio.

For example, with a formulation containing 3 phr modified acrylic modifier, maximum impact was obtained at at a ratio of 2:1 hydrated alumina to impact modifier. When the concentration of hydrated alumina was increased to an 8:1 ratio of hydrated alumina to impact modifier, impact strength equivalent to 3 phr impact modifier without hydrated alumina was obtained (Figure 1).

Impact modifiers are generally utilized in the range of about 1 phr to about 15 phr, and preferably in the range of about 2 phr to about 10 phr. The particular level will depend on the end use of the material. For example, injection molded PVC generally has an impact modifier level of about 2—3 phr while rigid PVC used for building siding has a usual level of about 4—8 phr. The use of very small particle size hydrated alumina in accordance with this invention will allow the use of somewhat lower levels of impact modifier. Inasmuch as high levels of impact modifier tend to reduce tensile strength and heat distortion temperature, the reduced level of impact modifier can provide polymeric vinyl halide materials which exhibit somewhat superior physical properties.

Optimum concentration of impact modifier and hydrated alumina will depend upon the formulation and desired performance characteristics of the compound. For example, if an Izod impact of 2.0 is sufficient for an outdoor weathering compound, then the data shown in Figure 1 illustrates that a formulation with 3 phr impact modifier can contain as much as 24 phr hydrated alumina and still maintain the same impact strength while taking advantage of the surprising improvement in weathering and processing characteristics also described herein and shown in Tables 6 and 7 and Figure 2. If improved impact is also desired, the hydrated alumina concentration can be reduced somewhat to obtain the desired impact properties while still obtaining advantageous weathering.

While as described above, the ratio of hydrated alumina to impact modifier can be as high as 8:1, it is preferred that the concentration of hydrated alumina be no higher than about 50 phr. If the level is greater than 50 phr, the processing characteristics may deteriorate and it may be difficult to distribute the hydrated alumina uniformly throughout the polymeric material.

D. Processibility

The addition of very fine particle size hydrated alumina to rigid PVC formulations as herein described results in improved processing characteristics as evidenced by reduced torques, stock temperatures and pressures, as well as increased dynamic processing stability.

A standard siding formulation containing, for example, 10 phr of said very fine particle size hydrated alumina, maintained an equilibrium torque of 1525 meter-grams and a stock temperature of 206°C compared to 1650 meter-grams and 208°C for the same formulation without hydrated alumina. In the same torque rheometer study, the compound with 10 phr hydrated alumina showed a 13% increase in heat stability with a stability time of 22.2 minutes compared to 19.6 minutes for the control. The same compound with 6 phr of said hydrated alumina gave a 9% increase in heat stability over the control (Table 4).

In addition to the torque rheometer studies, the same compounds were processed under controlled conditions on a Kraus-Maffei 25 mm conical twin screw laboratory extruder equipped with a 2½" (63.5 mm), 40 mil (1 mm) strip die. The use of very fine particle size hydrated alumina resulted in reduced torques (lower motor amperage) and pressures. The data is shown in Figure 2.

A common problem among weatherable rigid PVC processors is screw and barrel wear caused by the abrasiveness of titanium dioxide (Moh hardness about 6.5). Unlike alumina, which is very hard (Moh hardness about 9), hydrated alumina is relativley soft and similar to calcium carbonate with a Moh hardness of about 3. The potential for reduced titanium dioxide levels when formulating with the very fine particle size hydrated alumina could lead to reduced barrel and screw wear.

E. Weatherability

Another surprising and unexpected benefit derived from the use of the very fine particle size hydrated alumina as herein described in rigid PVC formulations is improved weatherability with the potential for reducing $TiO_2$ levels. For example, a standard siding formulation was compounded with various levels of very fine particle size hydrated alumina and extruded on the KM—25 laboratory extruder. Accelerated light stability testing of extruded samples in a Fluorescent Sunlamp/Black Light (FSBL) light source showed that the addition of hydrated alumina improved light stability (Table 5).

Another series was similarly extruded and tested in a QUV machine. It also showed that addition of very small particle size hydrated alumina improved light stability. In this series, a formulation containing 10 phr $TiO_2$ and 6 phr of such hydrated alumina appeared to be at least equivalent in light stability to the control formulation containing 12 phr $TiO_2$ and no hydrated alumina (Table 6).

Long term outdoor weathering tests have been conducted with hydrated alumina formulations for 12 months. White compound extruded strips were weathered 45° south in Arizona and green compound extruded strips were weathered 45° south in Florida. The results as shown in Tables 7 and 8 show this improvement.

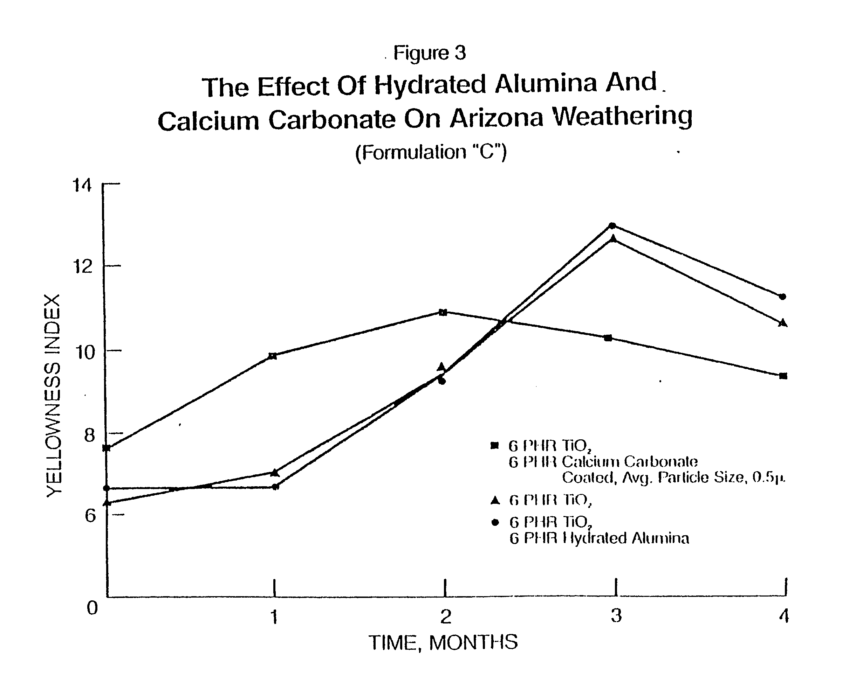

Arizona weathering tests conducted on rigid PVC formulations containing very small particle size hydrated alumina and calcium carbonate show that the compound containing calcium carbonate was more susceptible to yellowing and subsequent chalking than either the control or the formulation containing hydrated alumina. This characteristic of calcium carbonate is the reason this filler is not widely used in exterior compounds, especially colored formulations where chalking is especially detrimental (Figure 3).

Variable height impact tests (VHIT) were run on the green extruded strips prepared for Florida weathering tests. Impact results on the extruded samples containing hydrated alumina in accordance with the invention were equivalent to the control (Table 8).

In addition to the very fine particle size hydrated alumina and impact modifiers herein described, the polymeric vinyl halide compositions of the present invention may contain the usual compounding ingredients such as stabilizers and fillers and optional additives such as pigments, lubricants, dyes, ultraviolet light absorbing agents and plasticizers.

Generally, the very fine particle size hydrated alumina may be introduced into the polymeric vinyl halide formulation in any conventional manner, such as by preblending the selected hydrated alumina and impact modifier before blending with the polymeric resin, or alternatively, the components are blended individually in the resin. It is of course necessary that it be dispersed substantially uniformly throughout the mixture. In extruded formulations incorporation of hydrated alumina tends to reduce back pressure, so one should be careful that sufficient shear exists for thorough dispersion.

Conventional processing temperatures and conditions may be utilized so long as the processing temperature remains below about 230°C. If the processing temperature is higher than that value, there may be some decomposition of the hydrated alumina due to loss of water.

Example 1

Izod impact specimens were prepared using 35—40 mil (0.9 to 1 mm) sheet, milled at 325°F (163°C) for five minutes after banding. The milled sheet was then cut into four 6" × 6" (152 × 152 mm) sheets and plied, alternating the oriented sheets. The samples were compression molded into ⅛" (3.2 mm) plaques at 375°F (190°C) for ten minutes at 3000 PSI (20.7 N sq mm). Izod impact strength was determined according to ASTM D—256. Physical properties were determined according to the procedures described in ASTM D—1784.

Torque rheometer dynamic processing stability was obtained using a Brabender Plasti-Corder (C. W. Brabender, Hackensack, N.J.) electrically heated torque rheometer equipped with a No. 6 bowl according to the conditions identified in the tables.

Accelerated and outdoor weathering and variable height impact test (VHIT) were all determined on extruded strips obtained from compounds blended in a high intensity mixer and extruded under the same conditions on a KM—25 laboratory extruder equipped with a 2½" (63.5 mm), 40 mil (1 mm) strip die.

Extrusion conditions were Zones #1, #2 and #3, 320°F (160°C), 295°F (146°C), 325°F (163°C) respectively, and 380°F (193°C) on the die at 20 rpm screw speed.

Variable height impact tests were carried out according to procedures described in ASTM D—3679.

Outdoor and accelerated weathering tests were carried out as follows:

Outdoor Weathering — All samples were exposed 45° south with backing.

Fluorescent Sunlamp/Black Light (FSBL) — Samples were exposed with a repeating cycle of 100 hours U.V. exposure followed by 68 hours dark time.

QUV — Accelerated Weathering Test — Samples were exposed with a repeating cycle of 2 hours U.V. at 50°C followed by 4 hours condensate at 50°C using equipment conforming to ASTM G—53 manufactured by the Q-Panel Co., Cleveland, Ohio.

The following formulation materials were produced.

Formulation "A"

| | |
|---|---|
| PVC (K=65) | 100.0 |
| $TiO_2$ (rutile) | 2.0 |
| Calcium Stearate | 0.8 |
| Paraffin Wax, 165°F (74°C) | 1.2 |
| Processing Aid | 1.0 |
| Butyltin Mercaptide Stabilizer | 1.5 |

Formulation "B"

| | |
|---|---|
| PVC (K=65) | 100.0 |
| $TiO_2$ (rutile) | 12.0 |
| Modified Acrylic Modifier | 5.0 |
| Processing Aid | 0.3 |
| Calcium Stearate | 2.0 |
| Paraffin Wax, 165°F (74°C) | 1.0 |
| Butyltin Mercaptide Stabilizer | 1.5 |

Formulation "C"

| | |
|---|---|
| PVC (K=65) | 100.0 |
| $TiO_2$ (rutile) | 6.0 |
| Modified Acrylic Modifier | 5.0 |
| Processing Aid | 1.0 |
| Calcium Stearate | 2.0 |
| Paraffin Wax, 165°F (74°C) | 1.0 |
| Butyltin Mercaptide Stabilizer | 1.5 |

Formulation "A": was used for the Izod impact studies, the results of which are summarized in Tables 1, 2 and 3; and Formulation "B" was used for torque rheometer stability studies, extrusion, variable height impact testing and weathering studies, the results of which are summarized in Tables 4, 5, 6, 7 and 8. Formulation "C" was used for a weathering study in which hydrated alumina was compared to calcium carbonate, the results of which are shown in Figure 3. For green siding compound, a non-chalking grade of titanium dioxide was substituted for the chalking grade of titanium dioxide used in the white siding compound. Unless otherwise noted, hydrated alumina referred to in the tables was prepared by a precipitation process and had an average particle size of 0.5 μ.

The following tables illustrate the effects of hydrated alumina on various properties of rigid PVC materials.

TABLE 1
SYNERGISM OF HYDRATED ALUMINA & IMPACT MODIFIER
Formulation "A"

| | phr | | | | | | | | |
|---|---|---|---|---|---|---|---|---|---|
| Variable | 1 | 2 | 3 | 4 | 5 | 6 | 7 | 8 | 9 |
| Modified Acrylic | — | 5 | — | 5 | 3 | — | 3 | — | 3 |
| Hydrated Alumina | — | — | 12 | 12 | — | 6 | 6 | — | — |
| Calcium Carbonate(1) | — | — | — | — | — | — | — | 6 | 6 |
| Izod Impact (ft.-lbs./in.-notch) | 0.8 | 14.3 | 1.8 | 18.3 | 2.1 | 1.6 | 8.1 | 1.0 | 2.2 |
| Ditto mN/cm notch | 0.4 | 7.6 | 1.0 | 9.8 | 1.1 | 0.9 | 4.3 | 0.5 | 1.2 |

(1)Coated, average particle size 0.8 μ.

TABLE 2
EFFECT OF MODIFIER TYPE ON REINFORCEMENT WITH HYDRATED ALUMINA
(Formulation A)

| | phr | | | | | | | | | | |
|---|---|---|---|---|---|---|---|---|---|---|---|
| Variable | 1 | 2 | 3 | 4 | 5 | 6 | 7 | 8 | 9 | 10 | 11 |
| Hydrated Alumina | 6.0 | — | 6.0 | — | 6.0 | — | 6.0 | — | 6.0 | — | 6.0 |
| Modified Acrylic | — | 5.0 | 5.0 | — | — | — | — | — | — | — | — |
| All-Acrylic | — | — | — | 5.0 | 5.0 | — | — | — | — | — | — |
| MBS | — | — | — | — | — | 5.0 | 5.0 | — | — | — | — |
| CPE | — | — | — | — | — | — | — | 5.0 | 5.0 | — | — |
| ABS | — | — | — | — | — | — | — | — | — | 5.0 | 5.0 |
| Izod Impact (ft.-lbs./in. notch) | 1.0 | 14.3 | 22.6 | 2.6 | 13.9 | 5.3 | 8.4 | 1.5 | 20.9 | 2.5 | 9.4 |
| Ditto (mN/cm notch) | 0.5 | 7.6 | 12.1 | 1.4 | 7.4 | 2.8 | 4.5 | 0.8 | 11.2 | 1.3 | 5.0 |

Modified Acrylic — Durastrength 200, M&T Chemicals Inc.
All-Acrylic — KM—323B, Rohm & Haas Company
MBS — KM—611, Rohm & Haas Company
CPE — 3614, Dow Chemical Company
ABS — Blendex 301, Borg-Warner Chemicals

TABLE 3
EFFECT OF PARTICLE SIZE AND FILLER TYPE
(Formulation "A")

| | phr | | | | | |
|---|---|---|---|---|---|---|
| Variable | 1 | 2 | 3 | 4 | 5 | 6 |
| Modified Acrylic | 3.0 | 3.0 | 3.0 | 3.0 | 3.0 | 3.0 |
| Hydrated Alumina | — | 6.0 | 6.0 | 6.0 | — | — |
| Alumina | — | — | — | — | 6.0 | — |
| Hydrated Silica | — | — | — | — | — | 6.0 |
| Average Particle Size, µ. | — | 0.5 | 1.0 | 8.0 | 1.0 | 0.12 |
| Izod Impact (ft.-lbs./in.-notch) | 2.1 | 8.1 | 2.1 | 1.0 | 0.7 | 2.0 |
| Ditto (mN/cm notch) | 1.1 | 4.3 | 1.1 | 0.5 | 0.4 | 1.1 |

TABLE 4
EFFECT OF HYDRATED ALUMINA ON
DYNAMIC PROCESSING STABILITY(1)

| Variable Formulation | A | A | B | B | B |
|---|---|---|---|---|---|
| $TiO_2$ | 2.0 | 2.0 | 12.0 | 12.0 | 12.0 |
| Modified Acrylic | 3.0 | 3.0 | 5.0 | 5.0 | 5.0 |
| Hydrated Alumina | — | 6.0 | — | 6.0 | 10.0 |
| Stability, Min. | 25.3 | 27.5 | 19.6 | 21.3 | 22.2 |
| Equil. Torque, m-g. | 2250 | 2200 | 1650 | 1600 | 1525 |

(1) Torque Rheometer
Formulation "A: — 200°C, 60 g. charge 60 RPM
Formulation "B: — 200°C, 65 g. charge 75 RPM

TABLE 5
THE EFFECT OF HYDRATED ALUMINA ON
FSBL (1) ACCELERATED WEATHERING

| Variables | 1 | 2 | 3 | 4 | 5 | 6 |
|---|---|---|---|---|---|---|
| Modified Acrylic | 3 | 3 | 3 | 4 | 4 | 4 |
| Hydrated Alumina | — | 4.0 | 6.0 | — | 4.0 | 6.0 |
| Hours | | | Yellowness Index | | | |
| Initial | 4.6 | 4.9 | 4.9 | 4.4 | 4.6 | 4.7 |
| 500 | 9.6 | 9.2 | 8.5 | 8.4 | 7.8 | 8.1 |
| 1000 | 16.1 | 14.5 | 13.7 | 14.0 | 12.8 | 12.6 |
| 1500 | 18.6 | 16.3 | 16.1 | 16.4 | 15.6 | 14.5 |

(1) Fluorescent Sunlamp/Black Light.

TABLE 6
THE EFFECT OF HYDRATED ALUMINA ON
QUV ACCELERATED WEATHERING
(Formulation "B")

| $TiO_2$, phr | Hydrated Alumina, phr | Yellowness Index | | | |
|---|---|---|---|---|---|
| | | Initial | 2 Wks. | 4 Wks. | 10 Wks. |
| 12 | — | 4.4 | 6.3 | 10.5 | 13.2 |
| 12 | 6 | 3.2 | 5.3 | 8.3 | 11.2 |
| 12 | 10 | 3.2 | 5.7 | 8.5 | 10.7 |
| 10 | 6 | 3.2 | 5.6 | 8.8 | 11.8 |

TABLE 7
THE EFFECT OF HYDRATED ALUMINA ON
WEATHERING (1)
(Formulation "B")

| Variables | 1 | 2 | 3 |
|---|---|---|---|
| $TiO_2$ | 12 | 12 | 12 |
| Modified Acrylic | 5 | 5 | 5 |
| Hydrated Alumina | — | 3.0 | 6.0 |
| Months | Yellowness Index | | |
| 0 | 3.0 | 3.0 | 3.1 |
| 3 | 9.4 | 8.4 | 6.4 |
| 6 | 10.0 | 9.1 | 6.3 |
| 9 | 11.6 | 9.9 | 6.7 |
| 12 | 14.2 | 13.6 | 9.7 |

(1) Arizona

TABLE 8
THE EFFECT OF HYDRATED ALUMINA ON WEATHERING (1)(2)

| Variables | 1 | 2 | 3 | 4 |
|---|---|---|---|---|
| $TiO_2$ | 12 | 12 | 12 | 12 |
| Modified Acrylic | 5 | 5 | 3 | 3 |
| Hydrated Alumina | — | 6 | — | 6 |
| VHIT, in.-lbs./mil, 23°C | 3.4 | 3.4 | 3.6 | 3.5 |
| Ditto mN/mm | 15.1 | 15.1 | 16.0 | 15.6 |
| Months | | E(3) | | |
| 3 | .3 | .3 | .4 | .5 |
| 6 | .6 | .2 | .5 | .2 |
| 9 | .7 | .2 | .6 | .3 |
| 12 | 1.0 | .7 | .9 | .5 |

(1) Florida
(2) Formulation "B", non-chalking $TiO_2$, 1.5 phr chrome oxide
(3) ASTM D—2244

Example 2

A series of polyvinyl chloride formulations were prepared using the proportion of ingredients listed in Table 9 to evaluate the effect of hydrated alumina on weatherability of formulations prepared with or without impact modifiers and/or plasticizers. Accelerated weathering tests (FSBL and QUV) described in Example 1 were used to evaluate each of the formulations and the results are also summarized in Table 9.

Each of the formulations of this example were milled for 5 minutes at 350°F (177°C) after bonding and test samples were compression molded at 350°F (177°C) for 5 minutes into 125 mil (3.2 mm) plaques. Yellowness index was obtained on a MACBETH® 1500 colormeter.

It can be seen from the results reported in Table 9 that each of the formulations containing very fine particle size hydrated alumina (0.5 μ avg) exhibited improved weatherability over those formulations which did not contain said hydrated alumina. This improvement in weatherability can be seen for formulations which were prepared with or without an impact modifier or plasticizer, and with formulations containing both an impact modifier and plasticizer. While the results show that the impact modifier and plasticizer used in the formulations of this example result in improved weatherability, the use of hydrated alumina having an average particle size of 0.5 μ further enhanced the weatherability of the formulation.

TABLE 9
Formulations (phr)

| | 1 | 2 | 3 | 4 | 5 | 6 | 7 | 8 | 9 | 10 | 11 | 12 |
|---|---|---|---|---|---|---|---|---|---|---|---|---|
| PVC (K=65) | 100.0 | 100.0 | 100.0 | 100.0 | 100.0 | 100.0 | 100.0 | 100.0 | 100.0 | 100.0 | 100.0 | 100.0 |
| $TiO_2$ | 2.0 | 2.0 | 2.0 | 2.0 | 2.0 | 2.0 | 2.0 | 2.0 | 2.0 | 2.0 | 2.0 | 2.0 |
| 1 Processing Aid | 0.3 | 0.3 | 0.3 | 0.3 | 0.3 | 0.3 | 0.3 | 0.3 | 0.3 | 0.3 | 0.3 | 0.3 |
| Calcium Stearate | 2.0 | 2.0 | 2.0 | 2.0 | 2.0 | 2.0 | 2.0 | 2.0 | 2.0 | 2.0 | 2.0 | 2.0 |
| Paraffin Wax 165°F (74°C) | 1.0 | 1.0 | 1.0 | 1.0 | 1.0 | 1.0 | 1.0 | 1.0 | 1.0 | 1.0 | 1.0 | 1.0 |
| 2 Stabilizer | 1.5 | 1.5 | 1.5 | 1.5 | 1.5 | 1.5 | 1.5 | 1.5 | 1.5 | 1.5 | 1.5 | 1.5 |
| 3 Impact Modifier | — | 3.0 | — | 3.0 | 3.0 | 3.0 | 3.0 | 3.0 | — | — | — | — |
| 4 Hydrated Alumina (0.5 μ avg.) | — | — | 6.0 | 6.0 | 6.0 | 6.0 | — | — | 6.0 | 6.0 | — | — |
| 5 Plasticizer | — | — | — | — | 30.0 | 15.0 | 30.0 | 15.0 | 30.0 | 15.0 | 30.0 | 15.0 |
| | | | | Yellowness Index | | | | | | | | |
| QUV Weathering | | | | | | | | | | | | |
| Initial Y.I. | 7.1 | 7.0 | 8.0 | 7.5 | 5.8 | 6.3 | 5.7 | 6.0 | 5.9 | 7.4 | 5.4 | 6.3 |
| Δ Y.I. 168 hrs. | 5.1 | 4.1 | 4.5 | 3.0 | 0.0 | 2.8 | 1.9 | 2.4 | 0.4 | 2.0 | 1.3 | 3.3 |
| 236 hrs. | 14.5 | 7.8 | 9.0 | 6.8 | 2.7 | 4.3 | 3.6 | 6.0 | 2.4 | 4.5 | 3.1 | 9.1 |
| 420 hrs. | 17.2 | 10.5 | 11.1 | 7.1 | 3.1 | 4.7 | 4.6 | 6.4 | 2.8 | 4.9 | 3.7 | 10.0 |
| FSBL, Weathering | | | | | | | | | | | | |
| Δ Y.I. 168 hrs. | −0.3 | −0.2 | −0.4 | −0.6 | −1.0 | 0.5 | −1.1 | −0.9 | −1.5 | −0.1 | −1.0 | −0.9 |
| 236 hrs. | 4.8 | 2.3 | 3.5 | 1.5 | 0.9 | 3.3 | 1.0 | 4.2 | 0.7 | 3.1 | 1.8 | 4.7 |

1 acrylic processing aid designated as K—120N from Rohm & Haas.
2 dibutyltin mercaptide stabilizer.
3 modified acrylic designated as DURASTRENGTH 200 from M&T Chemicals Inc.
4 precipitated hydrated alumina having an average particle size of 0.5 μ (less than about 0.5%>1 μ).
5 dioctyl phthalate.

Example 3

A series of polyvinyl chloride formulations were prepared using the proportion of ingredients listed in Table 10 to evaluate the effect of hydrated alumina on weatherability. Accelerated weathering tests (FSBL and QUV) described in Example 1 were used and the results obtained are summarized in Table 11.

Each of the formulations of this example were milled for 5 minutes at 350°F (177°C) after bonding. Formulations 1 to 5 were prepared by individually adding each of the ingredients and formulation 6 was prepared by preblending the impact modifier, stabilizer, processing aid, $TiO_2$ and hydrated alumina were prepared by individually adding each of the ingredients and formulation 6 was prepared by preblending the impact modifier, stabilizer, processing aid, $TiO_2$ and hydrated alumina.

It can be seen from the results shown in Table 11 that the addition of a hydrated alumina having an average particle size of 0.5 μ and 0.9 μ to polyvinyl chloride formulations enhanced the weathering characteristics thereof as compared to a formulation which did not contain the hydrated alumina filler. It can also be seen from the results that hydrated alumina having an average particle size of 0.5 μ enhanced the weatherability of PVC formulations which contained an impact modifier and these advantageous results were obtained with the compounding ingredients being added individually or as a preblended mixture.

TABLE 10
Formulation (phr)

| | 1 | 2 | 3 | 4 | 5 | 6 |
|---|---|---|---|---|---|---|
| 1 PVC | 100.0 | 100.0 | 100.0 | 100.0 | 100.0 | 100.0 |
| 2 Processing Aid | 0.5 | 0.5 | 0.5 | 0.5 | 0.5 | 0.5 |
| Paraffin wax (165°) (74°C) | 1.0 | 1.0 | 1.0 | 1.0 | 1.0 | 1.0 |
| 3 Impact modifier | — | 3.0 | — | 3.0 | — | 3.0 |
| $TiO_2$ (chalking) | 2.0 | 2.0 | 2.0 | 2.0 | 2.0 | 2.0 |
| Calcium Stearate | 2.0 | 2.0 | 2.0 | 2.0 | 2.0 | 2.0 |
| 4 Hydrated alumina (0.5 μ avg.) | — | — | 6.0 | 6.0 | — | 6.0 |
| 5 Hydrated alumina (0.9 μ avg.) | — | — | — | — | 6.0 | — |
| 6 Stabilizer | 1.5 | 1.5 | 1.5 | 1.5 | 1.5 | 1.5 |

1 PVC designated as GEON® 103 EPF 76 (inherent viscosity 0.9; K=65) from B. F. Goodrich Chemical Company.
2 METABLEN® P—551 from Mitsubishi Rayon Co.
3 Modified acrylic designated as DURASTRENGTH® 200.
4 precipitated hydrated alumina having an average particle size of 0.5 μ (less than about .5% greater than 1 μ).
5 precipitated hydrated alumina having an average particle size of 0.9 μ.
6 butyltin mercaptide stabilizer.

TABLE 11
QUV ACCELERATED WEATHERING
Yellowness Index
Formulations

| | 1 | 2 | 3 | 4 | 5 | 6 |
|---|---|---|---|---|---|---|
| Initial Y.I. | 7.6 | 7.8 | 8.4 | 9.2 | 8.2 | 11.5 |
| Δ Y.I. 168 hrs. | 5.4 | 3.8 | 3.8 | 2.0 | 4.0 | 3.1 |
| 336 hrs. | 16.0 | 8.9 | 8.4 | 5.1 | 9.4 | 5.9 |
| 420 hrs. | 19.0 | 10.9 | 10.8 | 5.8 | 10.9 | 6.1 |

FSBL ACCELERATED WEATHERING
Yellowness Index
Formulations

| | 1 | 2 | 3 | 4 | 5 | 6 |
|---|---|---|---|---|---|---|
| Initial Y.I. | 7.6 | 7.8 | 8.4 | 9.2 | 8.2 | 11.5 |
| Δ Y.I. 168 hrs. | 2.3 | 1.4 | 1.0 | 1.0 | 1.7 | 1.5 |
| 336 hrs. | 4.1 | 1.8 | 2.3 | 1.0 | 3.0 | 1.4 |

## Claims

1. A polymeric vinyl halide composition which comprises a polymeric vinyl halide material and an impact modifier characterised in that it also contains hydrated alumina having an average particle size of less than one micrometer in sufficient quantity to form with the said impact modifier a synergistic combination which substantially enhances the impact strength of said composition.

2. A composition in accordance with claim 1 wherein said hydrated alumina has an average particle size of from about 0.4 micrometer to about 0.6 micrometer.

3. A composition in accordance with either preceding claim wherein said impact modifier is present in an amount from about 1 phr to about 15 phr.

4. A composition in accordance with any preceding claim wherein said hydrated alumina is present in a weight ratio to said impact modifier of from about 1:2 to about 8:1.

5. A composition in accordance with claim 4 wherein said hydrated alumina is present in a weight ratio to said impact modifier of from about 1:1 to about 4:1.

6. A composition in accordance with any preceding claim wherein the polymeric vinyl halide is polyvinyl chloride.

7. A composition in accordance with any preceding claim wherein the impact modifier is chosen from chlorinated polyethylene, modified acrylic, all-acrylic, ABS and MBS modifiers.

8. A composition in accordance with any preceding claim wherein the polymeric vinyl halide composition contains a filler material.

9. A composition in accordance with claim 8 wherein the filler material is titanium dioxide.

10. A method for increasing the impact resistance of a polymeric vinyl halide material which comprises incorporating into a polymeric vinyl halide material

a) an impact modifier; and

b) hydrated alumina having an average particle size of less than one micrometer in an amount which forms a synergistic combination for increasing the impact resistance of said polyvinyl halide material.

11. A method in accordance with claim 10 wherein the temperature during said blending is maintained below about 230°C.

12. A method in accordance with claim 10 or claim 11 wherein said hydrated alumina has an average particle size of about 0.4 μ to about 0.6 μ.

13. A method in accordance with any of claims 10 to 12 wherein said impact modifier is present in an amount from about 1 phr to about 15 phr.

14. A method in accordance with any of claims 10 to 13 wherein said hydrated alumina is added in a weight ratio to impact modifier of from about 1:2 to about 8:1.

15. A method in accordance with claim 14 wherein said hydrated alumina is added in a weight ratio to impact modifier of from about 1:1 to about 4:1.

16. A method in accordance with any of claims 10 to 15 wherein the polymeric vinyl halide is polyvinyl chloride.

17. A method in accordance with any of claims 10 to 16 wherein the impact modifier is chosen from chlorinated polyethylene, modified acrylic, all-acrylic, ABS and MBS modifiers.

18. A method in accordance with any of claims 10 to 17 wherein the polymeric vinyl halide composition contains a filler material.

19. A method in accordance with claim 18 wherein the filler material is titanium dioxide.

**Patentansprüche**

1. Eine polymere Vinylhalidzusammensetzung, die ein polymeres Vinylhalidmaterial und einen Schlagfestigkeitsmodifizierer umfaßt, dadurch gekennzeichnet, daß sie auch hydratisiertes Aluminiumoxid mit einer durchschnittlichen Teilchengröße von weniger als 1 Mikrometer in ausreichender Menge enthält, um mit dem genannten Schlagzähigkeitsmodifizierer eine synergistische Kombination zu bilden, die die Schlagfestigkeit der genannten Zusammensetzung wesentlich erhöht.

2. Eine Zusammensetzung nach Anspruch 1, worin das genannte hydratisierte Aluminiumoxid eine durchschnittliche Teilchengröße von etwa 0,4 Mikrometer bis etwa, 0,6 Mikrometer aufweist.

3. Eine Zusammensetzung nach einem der vorhergehenden Ansprüche, worin der genannte Schlagzähigkeitsmodifizierer in einer Menge von 1 Teil/100 bis etwa 15 Teile/100 vorliegt.

4. Eine Zusammensetzung nach einem der vorhergehenden Ansprüche, worin das genannte hydratisierte Aluminiumoxid in einem Gewichtsverhältnis zu dem genannten Schlagzähigkeitsmodifizierer von etwa 1:2 bis etwa 8:1 vorliegt.

5. Eine Zusammensetzung nach Anspruch 4, worin das genannte hydratisierte Aluminiumoxid in einem Gewichtsverhältnis zu dem genannten Schlagzähigkeitsmodifizierer von etwa 1:1 bis etwa 4:1 vorliegt.

6. Eine Zusammensetzung nach einem der vorhergehenden Ansprüche, worin das polymere Vinylhalid Polyvinylchlorid ist.

7. Eine Zusammensetzung nach einem der vorhergehenden Ansprüche, worin der Schlagzähigkeitsmodifizierer aus chloriertem Polyäthylen, modifiziertem Acryl, All-Acryl, ABS und MBS-Modifizierern gewählt wird.

8. Eine Zusammensetzung nach einem der vorhergehenden Ansprüche, worin die polymere Vinylhalidzusammensetzung ein Füllmaterial enthält.

9. Eine Zusammensetzung nach Anspruch 8, worin das Füllmaterial Titandioxid ist.

10. Eine Verfahren zur Erhöhung der Schlagfestigkeit eines polymeren Vinylhalidmaterials, umfassend das Einbringen in ein polymeres Vinylhalidmaterial

a) eines Schlagzähigkeitsmodifizieres; und

b) hydratisiertem Aluminiumoxid mit einer durchschnittlichen Teilchengröße von weniger als 1 Mikrometer in einer Menge, die eine synergistische Kombination zur Steigerung der Schlagfestigkeit des genannten Polyvinylhalidmaterials bildet.

11. Ein Verfahren nach Anspruch 10, worin die Temperatur während des genannten Mischens unter etwa 230°C gehalten wird.

12. Ein Verfahren nach Anspruch 10 oder 11, worin das genannte hydratisierte Aluminiumoxid eine durchschnittliche Teilchengröße von etwa 0,4 μ bis etwa 0,6 μ aufweist.

13. Ein Verfahren nach einem der Ansprüche 10—12, worin der genannte Schlagzähigkeitsmodifizierer in einer Menge von etwa 1 Teil/100 bis etwa 15 Teile/100 vorliegt.

14. Ein Verfahren nach einem der Ansprüche 10—13, worin das genannte hydratisierte Aluminiumoxid in einem Gewichtsverhältnis zum Schlagzähigkeitsmodifizierer von etwa 1:2 bis etwa 8:1 zugegeben wird.

15. Ein Verfahren nach Anspruch 14, worin das genannte hydratisierte Aluminiumoxid in einem Gewichtsverhältnis zum Schlagzähigkeitsmodifizierer von etwa 1:1 bis etwa 4:1 zugegeben wird.

16. Ein Verfahren nach einem der Ansprüche 10—15, worin das Vinylhalidpolymer Polyvinylchlorid ist.

17. Ein Verfahren nach einem der Ansprüche 10—16, worin der Schlagzähigkeitsmodifizierer aus chloriertem Polyäthylen, modifiziertem Acryl, All-Acryl, ABS- und MBS-Modifizierern gewählt wird.

18. Ein Verfahren nach einem der Ansprüche 10—17, worin die polymere Vinylhalidzusammensetzung ein Füllmaterial enthält.

19. Ein Verfahren nach Anspruch 18, worin das Füllmaterial Titandioxid ist.

**Revendications**

1. Composition polymérique d'halogénure de vinyle qui comprend un matériau d'halogénure de vinyle polymérique et un modificateur de résistance au choc, caractérisée en ce qu'elle contient également de l'alumine hydratée ayant une dimension particulaire moyenne de moins de un micromètre en une quantité suffisante pour former, avec ledit modificateur de résistance au choc, une combinaison synergique qui améliore sensiblement la résistance au choc de ladite composition.

2. Composition selon la revendication 1 où ladite alumine hydratée a une dimension particulaire moyenne d'environ 0,4 micromètre à environ 0,6 micromètre.

3. Composition selon l'une des revendications précédentes où ledit modificateur de résistance au choc est présent en une quantité d'environ 1 pcc à environ 15 pcc.

4. Composition selon l'une quelconque des revendications précédentes où ladite alumine hydratée est présente à un rapport pondéral, audit modificateur d'impact, d'environ 1:2 à environ 8:1.

5. Composition selon la revendication 4 où ladite alumine hydratée est présente à un rapport pondéral, audit modificateur d'impact, d'environ 1:1 à environ 4:1.

6. Composition selon l'une quelconque des revendications précédentes où l'halogénure de vinyle polymérique est du chlorure de polyvinyle.

7. Composition selon l'une quelconque des revendications précédentes où le modificateur de résistance au choc est choisi parmi le polyéthylène chloré, des modificateurs acrylique modifié, totalement acryliques, ABS et MBS.

8. Composition selon l'une quelconque des revendications précédentes où la composition polymérique d'halogénure de vinyle contient un matériau de charge.

9. Composition selon la revendication 8 où le matériau de charge est du bioxyde de titane.

10. Procédé pour augmenter la résistance au choc d'un matériau polymérique d'halogénure de vinyle qui consiste à incorporer, dans un matériau polymérique d'halogénure de vinyle,

a) un modificateur de la résistance au choc; et

b) de l'alumine hydratée ayant une dimension particulaire moyenne de moins de un micromètre en une quantité qui forme une combinaison synergique pour augmenter la résistance au choc dudit matériau d'halogénure de polyvinyle.

11. Procédé selon la revendication 10 où la température pendant ledit mélange est maintenue en-dessous d'environ 230°C.

12. Procédé selon la revendication 10 ou la revendication 11 où ladite alumine hydratée a une dimension particulaire moyenne d'environ 0,4 μ à environ 0,6 μ.

13. Procédé selon l'une quelconque des revendications 10 à 12 où ledit modificateur de résistance au choc est présent en une quantité d'environ 1 pcc à environ 15 pcc.

14. Procédé selon l'une quelconque des revendications 10 à 13 où ladite alumine hydratée est ajoutée à un rapport pondéral, au modificateur de choc, d'environ 1:2 à environ 8:1.

15. Procédé selon la revendication 14 où ladite alumine hydratée est ajoutée à un rapport pondéral, au modificateur de résistance au choc, d'environ 1:1 à environ 4:1.

16. Procédé selon l'une quelconque des revendications 10 à 15 où l'halogénure de vinyle polymérique est le chlorure de polyvinyle.

17. Procédé selon l'une quelconque des revendications 10 à 16 où le modificatuer de résistance au choc est choisi parmi le polyéthylène chloré, des modificateurs acrylique modifié, tout acrylique, ABS et MBS.

18. Procédé selon l'une quelconque des revendications 10 à 17 où la composition polymérique d'halogénure de vinyle contient un matériau de charge.

19. Procédé selon la revendication 18 où le matériau de charge est le bioxyde de titane.

Figure 1

**Effect Of Hydrated Alumina Concentration On Izod Impact**

(Formulation "A" W/3PHR Modified Acrylic)

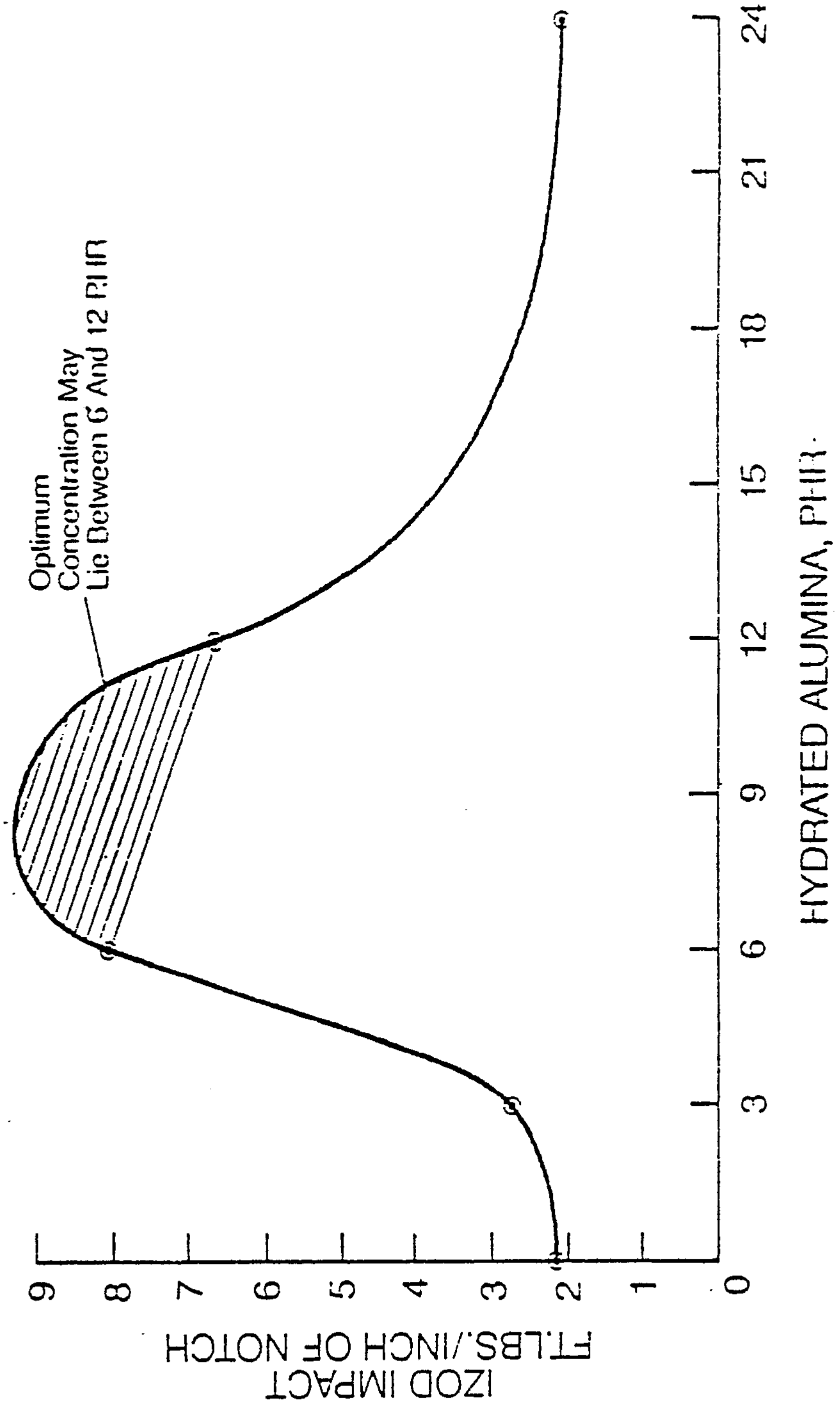

Figure 2

**Effect Of Hydrated Alumina On Extrusion**

(Formulation "B")

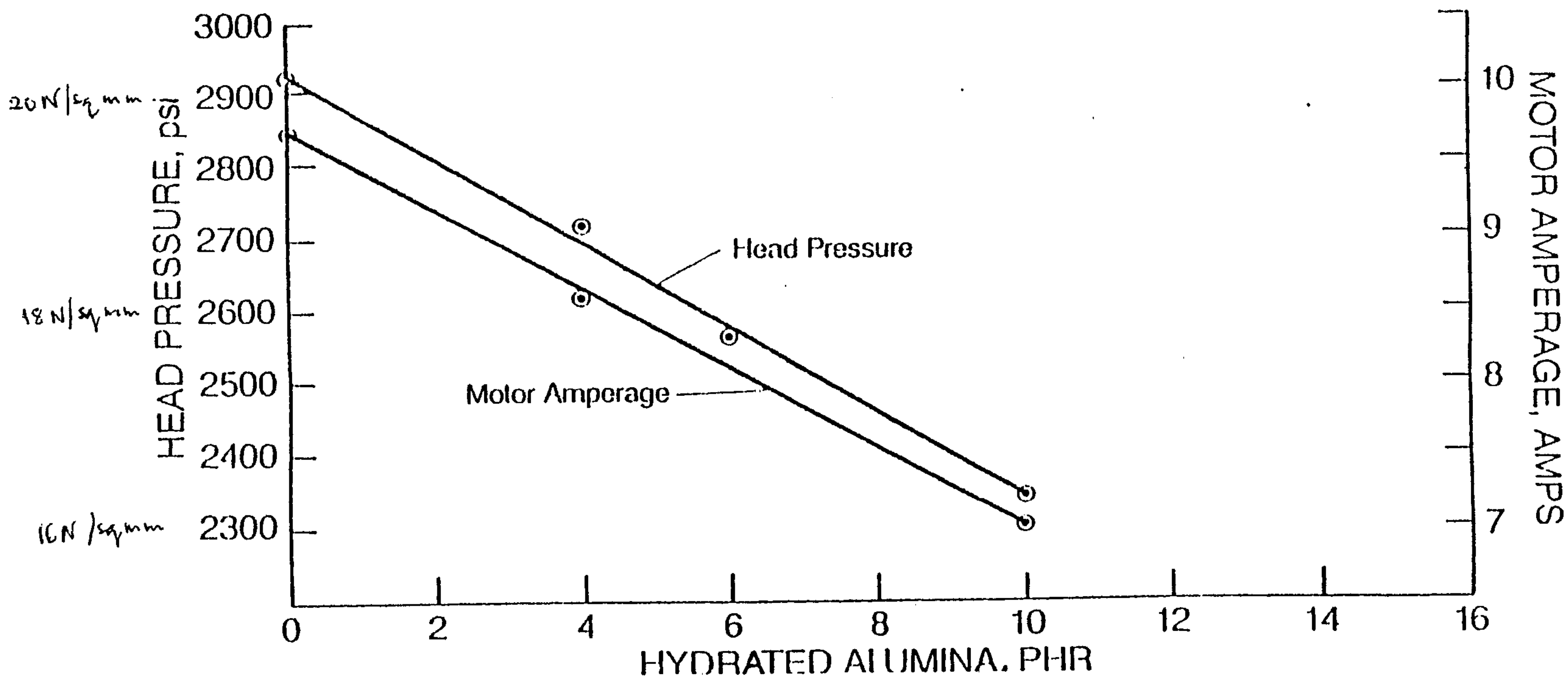

Figure 3

**The Effect Of Hydrated Alumina And Calcium Carbonate On Arizona Weathering**

(Formulation "C")